# EUROPÄISCHE PATENTSCHRIFT

(11) **EP 3 854 618 B1**
(45) Veröffentlichungstag und Bekanntmachung des Hinweises auf die Patenterteilung: **09.03.2022**
(21) Anmeldenummer: 20152870.0
(22) Anmeldetag: 21.01.2020
(51) Int. Cl.: B60K 15/04, F16L 33/22

(54) **KRAFTSTOFFTANK UMFASSEND EIN VERBINDUNGSSTÜCK**
FUEL TANK COMPRISING A CONNECTOR
RÉSERVOIR DE CARBURANT COMPRENANT UN RACCORD

(43) Veröffentlichungstag der Anmeldung: 28.07.2021
(73) Patentinhaber: Magna Energy Storage Systems GesmbH, 8261 Sinabelkirchen (AT)
(72) Erfinder: STEINMANN, Dominik, 8223 Stubenberg (AT); FUCHS, Stefan, 8141 Graz (AT)
(74) Vertreter: Zangger, Bernd

(56) Entgegenhaltungen:
- DE-A1- 10 100 128
- DE-A1-102016 223 634
- DE-T2- 69 213 044
- US-A1- 2003 173 776
- US-A1- 2011 259 447

## Beschreibung

### Gebiet der Erfindung

Die vorliegende Erfindung betrifft einen Kraftstofftank umfassend einen Kraftstoffbehälter, ein Einfüllrohr und ein Verbindungsstück zur Verbindung des Einfüllrohrs mit dem Kraftstoffbehälter.

### Stand der Technik

Kraftfahrzeuge verwenden Kraftstoffbehälter zum Mitführen des benötigten Treibstoffes. Zum Befüllen des Kraftstoffbehälters weist ein solcher üblicherweise ein Einfüllrohr auf.

In jüngerer Zeit wird versucht sowohl die Kraftstoffbehälter als auch die Einfüllstutzen aus anderen Materialen als beispielsweise Stahl zu erzeugen, insbesondere um Gewicht und Kosten einzusparen. Zusätzlich werden inzwischen auch hohe Anforderungen in Bezug auf geringe Emissionen an Tanksysteme gestellt. Beispielsweise werden daher Einfüllrohre eingesetzt, die Kunststoffschläuche umfassen, wobei die Einfüllrohre und/oder deren Kunststoffschläuche eine Barriereschicht zur Reduktion von Kohlenwasserstoff-Emissionen aufweisen können.

Besonders schwierig ist bei moderneren Tanksystemen, insbesondere in Hybridbauweise, die Anbindung zwischen Einfüllrohr und Kraftstoffbehälter emissionsarm, mit geringem Gewicht und dennoch kostengünstig zu gestalten. DE 101 00 128 A1 offenbart einen Kraftstofftank umfassend einen Kraftstoffbehälter, ein Einfüllrohr und ein Verbindungsstück zur Verbindung des Einfüllrohrs mit dem Kraftstoffbehälter, wobei das Verbindungsstück (1) ein im Wesentlichen zylinderförmiges Blechumformteil ist, wobei in das Blechumformteil eine erste Nut geformt ist, wobei ein ringförmiges Verriegelungselement durch eine Abstützung an der ersten Nut des Verbindungsstückes axial gegenüber dem Verbindungsstück sichert. DE 10 2016 223634 A1 offenbart einen Kraftstofftank umfassend einen Kraftstoffbehälter mit einem Anschlussteil des Kraftstoffbehälters, ein Einfüllrohr und ein Verbindungsstück zur Verbindung des Einfüllrohrs mit dem Anschlussteil des Kraftstoffbehälters, wobei das Verbindungsstück ein Formteil ist, wobei in das Formteil eine erste Nut geformt ist, wobei ein ringförmiges Verriegelungselement zumindest abschnittsweise durch Öffnungen des Anschlussteils des Kraftstoffbehälters in das Innere des Anschlussteils des Kraftstoffbehälters reicht und dort das Anschlussteil des Kraftstoffbehälters durch eine Abstützung an der ersten Nut des Verbindungsstückes axial gegenüber dem Verbindungsstück sichert.

### Zusammenfassung der Erfindung

Es ist eine Aufgabe der Erfindung, einen Kraftstofftank, umfassend einen Kraftstoffbehälter und ein Einfüllrohr, in dieser Hinsicht zu verbessern und insbesondere einen Kraftstofftank anzugeben, der emissionsarm, mit geringem Gewicht und dennoch kostengünstig hergestellt werden kann.

Die Lösung der Aufgabe erfolgt durch einen Kraftstofftank gemäss den Merkmalen des Anspruchs 1 umfassend einen Kraftstoffbehälter, ein Einfüllrohr und ein Verbindungsstück zur Verbindung des Einfüllrohrs mit dem Kraftstoffbehälter, wobei das Verbindungstück ein im Wesentlichen zylinderförmiges Blechumformteil ist mit einem ersten Verbindungsende welches an dem ersten zu verbindenden Bauteil, nämlich am Einfüllrohr oder an einem Anschlussteil des Kraftstoffbehälters, befestigt ist und einem männlichen zweiten Verbindungsende welches im anderen zu verbindenden Bauteil, nämlich in dem Anschlussteil des Kraftstoffbehälters oder im Einfüllrohr, aufgenommen ist, wobei in das Blechumformteil in einem ersten Abschnitt des zweiten Verbindungsendes eine erste Nut geformt ist, wobei ein ringförmiges Verriegelungselement zumindest abschnittsweise durch Öffnungen des anderen zu verbindendem Bauteils in das Innere des anderen zu verbindendem Bauteils reicht und dort das andere zu verbindende Bauteil durch eine Abstützung, insbesondere einen Formschluss, an der ersten Nut des Verbindungsstückes axial gegenüber dem Verbindungsstück sichert.

Erfindungsgemäß wird ein Verbindungsstück verwendet, um ein Einfüllrohr mit einem Kraftstoffbehälter zu verbinden.

Das Verbindungsstück ist zylinderförmig und ist an zumindest einem Ende, nämlich dem zweiten Verbindungsende, als männliches Verbindungsteil ausgeführt. Das Verbindungsstück ist an einem ersten Ende am ersten zu verbindenden Bauteil befestigt, beispielsweise am Einfüllrohr, beispielsweise radial innerhalb des Einfüllrohrs angeordnet, und an einem zweiten Ende, nämlich dem zweiten Verbindungsende, radial innerhalb des anderen zu verbindenden Bauteils, insbesondere innerhalb eines wiederum zylinderförmigen Anschlussteils des Kraftstoffbehälters, angeordnet, beispielsweise in einem Anschlussnippel des Kraftstoffbehälters.

Erfindungsgemäß ist das Verbindungsstück als Blechumformteil ausgeführt. Ein solches Blechumformteil ist in der Herstellung wesentlich kostengünstiger und weist auch ein geringeres Gewicht auf, als beispielsweise ein Drehteil. Erfindungsgemäß wurde festgestellt, dass die Formbarkeit eines einfachen Blechumformteils ausreicht, um die benötigten Eigenschaften eines Verbindungsteils zwischen Einfüllstutzen und Kraftstoffbehälter realisieren zu können, insbesondere Dichtheit und einen sicheren axialen Sitz, auch bei Verwendung eines Schnellkupplungsmechanismus mit einem Verriegelungselement.

Zur Herstellung einer axialen Sicherung des Verbindungsstücks am Kraftstoffbehälter, ist in das Verbindungsstück eine erste Nut geformt. Ein ringförmiges Verriegelungselement, das an sich radial außerhalb des Anschlussteils umläuft aber zumindest abschnittsweise durch Öffnungen des Anschlussteils des Kraftstoffbehälters in das Innere des Anschlussteils reicht, insbesondere eine Sicherungsfeder, sichert das andere zu verbindende Bauteil und das Verbindungsstück axial gegeneinander mittels Formschluss. Zur Erreichung der axialen Sicherung wird unmittelbar oder mittelbar die in das Blechumformteil geformte erste Nut verwendet. Das Verriegelungselement kann selbst, oder über ein Zwischenbauteil, an der ersten Nut abgestützt sein. Die Verbindung über das Verriegelungselement kann einfach lösbar sein. Das zweite Verbindungsende des Verbindungsstücks kann daher eine Seite einer Schnellkupplung bilden.

Bevorzugt ist das erste Verbindungsende ebenfalls männlich ausgeführt, so dass das erste Verbindungsende radial innen, im ersten zu verbindenden Bauteil aufgenommen ist.

Vorzugsweise ist das erste zu verbindende Bauteil das Einfüllrohr, beispielsweise ein Anschlussabschnitt des Einfüllrohrs, und ist das andere zu verbindende Bauteil das Anschlussteil des Kraftstoffbehälters.

Vorzugsweise umfasst das Einfüllrohr einen Schlauch, insbesondere einen Kunststoffschlauch, wobei der Schlauch auf das erste Verbindungsende des Verbindungsstücks aufgeschoben ist. Das Einfüllrohr, insbesondere der Schlauch, kann auch am zweiten Verbindungsende des Verbindungsstücks, mittels Schnellkupplung, befestigt sein. Der Schlauch kann ein Ende des Einfüllrohrs bilden. Der Begriff "Einfüllrohr" kann somit einen festen Rohrteil umfassen und einen flexiblen Schlauchteil umfassen.

Außen am Schlauch, beispielsweise axial im Bereich des ersten Verbindungsendes, ist bevorzugt eine Schlauchklemme angeordnet, so dass der Schlauch zwischen Schlauchklemme und Verbindungsstück eingeklemmt ist.

Am axialen Ende des Verbindungsstücks an dem das Einfüllrohr befestigt ist, ist bevorzugt auch ein Schlauchanschluss ausgebildet, der eine umlaufende Einführschräge zum erleichterten Aufschieben des Schlauches aufweist, wobei die Einführschräge in eine radial nach außen abstehende umlaufende Haltenase übergehen kann.

Das erste Verbindungsende kann innerhalb eines Kunststoffeinfüllrohres, insbesondere innerhalb eines festen Rohrs eines Einfüllrohrs angeordnet sein, insbesondere eingepresst sein. Bei Metalleinfüllrohren kann dieses Verbindungsende auch mittels Schweißung oder Lötung an das Einfüllrohr angebunden sein.

Das erste Verbindungsende kann daher so ausgeführt sein, dass dieses geeignet ist in ein Kunststoffeinfüllrohr eingepresst zu werden. Das erste Verbindungsende kann insbesondere eine Tannenbaumgeometrie aufweisen. Das erste Verbindungsende kann auch so ausgeführt sein, dass es an ein Metalleinfüllrohr geschweißt oder gelötet werden kann.

In einem zweiten Abschnitt des zweiten Verbindungsendes ist bevorzugt eine umlaufende Dichtung zwischen dem Verbindungsstück und dem anderen zu verbindenden Bauteil angeordnet, wobei die umlaufende Dichtung bevorzugt in einer zweiten Nut des Verbindungsstücks liegt. Die umlaufende Dichtung kann insbesondere eine Ringdichtung sein.

Vorzugsweise ist in einem dritten Abschnitt des zweiten Verbindungsendes ein Rampenring angeordnet, wobei der Rampenring ein umlaufendes Bauteil ist mit einer keilförmigen Rampenfläche, wobei ein konischer Abschnitt des anderen zu verbindenden Bauteils außen an der keilförmigen Rampenfläche des Rampenrings anliegt.

Der Rampenring kann in der ersten Nut axial gesichert sein.

Die erste Nut kann eine radial nach innen geformte Nut sein.

Die erste Nut kann stattdessen auch durch zwei begrenzende, nach außen abstehende Wellen geformt sein. In diesem Fall ist der Rampenring bevorzugt an einer der zwei begrenzenden Wellen axial gesichert.

Die Abstützung, insbesondere der Formschluss mit der ersten Nut zur axialen Sicherung des Verbindungsstückes kann unmittelbar durch das ringförmige Verriegelungselement entstehen oder auch mittelbar über ein Zwischenteil, beispielsweise bei Verwendung des Rampenrings als Zwischenteil.

Das Anschlussteil besteht vorzugsweise aus Metall.

Im Bereich des zweiten Verbindungsendes des Verbindungsstückes ist bevorzugt eine Erdungsfahne zwischen Verbindungsstück und Anschlussteil ausgebildet, so dass ein elektrisch leitender Kontakt zwischen Verbindungsstück und Anschlussteil besteht. Die Erdungsfahne kann bevorzugt im selben dritten Abschnitt des zweiten Verbindungsendes liegen, in dem auch der Rampenring angeordnet ist. Die Erdungsfahne kann auch durch den Rampenring gebildet werden.

### Kurzbeschreibung der Zeichnungen

Die Erfindung wird im Folgenden beispielhaft unter Bezugnahme auf die Zeichnungen beschrieben.
- Fig. 1: ist eine schematische Schnittansicht eines erfindungsgemäßen Kraftstofftanks im Bereich des Verbindungsstücks in einer ersten Ausführungsform.
- Fig. 2: ist eine schematische Schnittansicht eines erfindungsgemäßen Kraftstofftanks im Bereich des Verbindungsstücks in einer zweiten Ausführungsform.

### Detaillierte Beschreibung der Erfindung

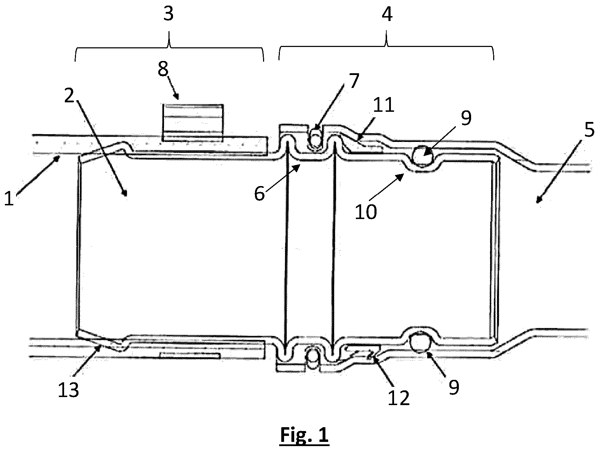

In Fig. 1 ist ein erfindungsgemäßer Kraftstofftank im Bereich des Verbindungsstücks zwischen Einfüllrohr und Kraftstoffbehälter in einer ersten Ausführungsform dargestellt.

Der Kraftstofftank umfasst einen in Fig. 1 nicht dargestellten Kraftstoffbehälter mit einem im Wesentlichen zylindrischen Anschlussteil 5 des Kraftstoffbehälters, beispielsweise einem Anschlussnippel, als anderes zu verbindendes Bauteil. Der Kraftstoffbehälter und/oder das Anschlussteil 5 besteht aus Metall. Der Kraftstoffbehälter und/oder das Anschlussteil 5 könnte jedoch auch beispielsweise aus Kunststoff bestehen.

Ein Einfüllrohr 1 aus Kunststoff wird - als erstes zu verbindendes Bauteil - mittels des Verbindungsstücks 2 mit dem Anschlussteil 5 des Kraftstoffbehälters verbunden. Alternativ könnte beispielsweise auch ein Einfüllrohr aus Metall verwendet werden.

Das Verbindungstück 2 ist ein im Wesentlichen zylinderförmiges Blechumformteil, welches an beiden Enden in der Art einer männlichen Steckverbindung ausgeführt ist. Das Verbindungsstück 2 weist ein erstes männliches Verbindungsende 3 auf, auf welches ein Schlauch des Einfüllrohrs 1 aufgesteckt ist, und ein zweites männliches Verbindungsende 4, welches in einem Anschlussteil 5 des Kraftstoffbehälters steckt.

Das erste Verbindungsende 3 und zweite Verbindungsende 4 erstrecken sich zusammen fast über die ganze Länge des Verbindungsstücks.

Das Einfüllrohr 1 besteht bevorzugt aus Kunststoff oder Metall. Besonders bevorzugt weist das Einfüllrohr 1 einen Schlauch als Endabschnitt auf, wobei der Schlauch besonders bevorzugt aus Kunststoff besteht. Das Einfüllrohr 1, insbesondere der Schlauch, ist auf das erste Verbindungsende 3 des Verbindungsstücks 2 aufgeschoben.

Außen am Schlauch, axial im Bereich des ersten Verbindungsendes 3, ist eine Schlauchklemme 8 angeordnet, so dass der Schlauch zwischen Schlauchklemme 8 und Verbindungsstück 2 eingeklemmt ist.

Am axialen Ende des ersten Verbindungsendes 3 des Verbindungsstücks 2 ist ein Schlauchanschluss 13 ausgebildet. Der Schlauchanschluss 13 umfasst eine umlaufende Einführschräge zum erleichterten Aufschieben des Schlauches des Einfüllrohrs 1. Die Einführschräge bildet auch eine radial nach außen abstehende umlaufende Haltenase aus, zum besseren Halt des Einfüllrohrs 1.

In das Blechumformteil, also das Verbindungsstück 2, ist in einem ersten Abschnitt des zweiten Verbindungsendes 4 eine erste Nut 6 geformt. In der Ausführung der Fig. 1 ist diese erste Nut 6 durch zwei begrenzende, nach außen abstehende, Wellen geformt.

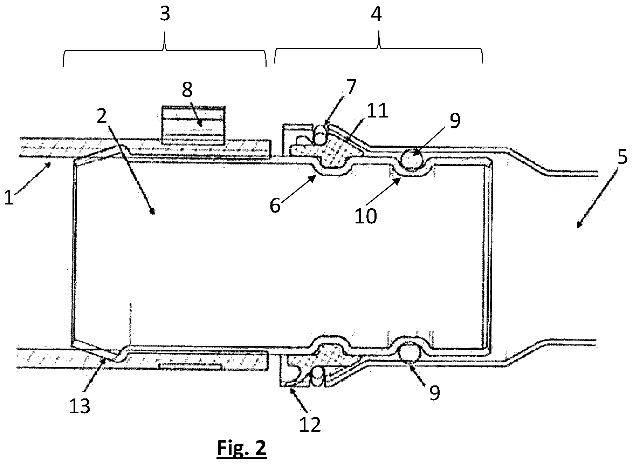

Ein ringförmiges Verriegelungselement 7 reicht zumindest abschnittsweise durch Öffnungen, insbesondere Schlitze, des Anschlussteils 5 des Kraftstoffbehälters in das Innere des Anschlussteils 5. Durch das Verriegelungselement 7 wird das Anschlussteil 5 mittels Formschluss mit der ersten Nut 6 des Verbindungsstückes 2 axial zumindest in einer Richtung gesichert. Das Verriegelungselement 7 kann dazu beispielsweise an den Wänden oder zumindest einer Wand der Nut 6 direkt abgestützt sein - wie in Fig. 1 dargestellt. Das Verriegelungselement 7 kann dazu aber auch an einem Zwischenbauteil abgestützt sein, welches selbst von der ersten Nut 6 bzw. den Wänden der ersten Nut 6 axial gesichert ist, beispielsweise von einem Bauteil das zusätzlich eine Rampe für das aufgesteckte Anschlussteil 5 bildet, nämlich einem Rampenring 11 - wie in Fig. 2 dargestellt.

In einem dritten Abschnitt des zweiten Verbindungsendes 4 - der vom ersten Abschnitt mit der ersten Nut 6 verschieden sein kann, aber auch teilweise oder ganz mit dem ersten Abschnitt zusammen fallen kann - ist ein Rampenring 11 angeordnet. Der Rampenring 11 ist ein, um den Umfang des Verbindungsstücks, umlaufendes Bauteil, mit einer dem Kraftstoffbehälter zugewandten keilförmigen Rampenfläche, wobei ein konischer Abschnitt des Anschlussteils 5 außen an der keilförmigen Rampenfläche des Rampenrings 11 anliegt.

Der Rampenring 11 kann in oder an der ersten Nut 6 axial gesichert sein. In der Ausführung der Fig. 1 liegt der Rampenring 11 an einer Welle, also einer Wand, der ersten Nut 6 an, in der Ausführung der Fig. 2 liegt der Rampenring 11 teilweise in der ersten Nut 6.

Die Rampe des Rampenrings 11 liegt beim Aufstecken des Anschlussteils 5 vor der Verriegelung mittels Verriegelungselement 7. Durch das Verriegelungselement 7 wird ein Abziehen des Verbindungsstücks 2 vom Anschlussteil 5 verhindert.

In einem zweiten Abschnitt des zweiten Verbindungsendes 4, der sich vom ersten und dritten Abschnitt unterscheiden kann, ist eine umlaufende Dichtung 9, insbesondere eine Ringdichtung, zwischen Verbindungsstück 2 und Anschlussteil 5 angeordnet. Die umlaufende Dichtung 9 liegt in einer zweiten Nut 10 des Verbindungsstücks 2 und ist hierdurch ebenfalls axial gesichert.

Im Bereich des zweiten Verbindungsendes 4 des Verbindungsstückes 2 ist zusätzlich eine Erdungsfahne 12 zwischen Verbindungsstück 2 und Anschlussteil 5 ausgebildet, so dass ein elektrisch leitender Kontakt zwischen Verbindungsstück 2 und Anschlussteil 5 besteht. Die Erdungsfahne 12 kann im selben Abschnitt des zweiten Verbindungsendes 4 liegen, in dem auch der Rampenring 11 angeordnet ist.

### Bezugszeichenliste

- 1: Einfüllrohr
- 2: Verbindungsstück
- 3: erstes Verbindungsende
- 4: zweites Verbindungsende
- 5: Anschlussteil des Kraftstoffbehälters
- 6: erste Nut
- 7: Verriegelungselement
- 8: Schlauchklemme
- 9: Dichtung
- 10: zweite Nut
- 11: Rampenring
- 12: Erdungsfahne
- 13: Schlauchanschluss

## Patentansprüche

1. Kraftstofftank umfassend einen Kraftstoffbehälter mit einem Anschlussteil (5) des Kraftstoffbehälters, ein Einfüllrohr (1) und ein Verbindungsstück (2) zur Verbindung des Einfüllrohrs (1) mit dem Anschlussteil (5) des Kraftstoffbehälters, wobei das Verbindungstück (2) ein im Wesentlichen zylinderförmiges Blechumformteil ist mit einem ersten Verbindungsende (3) welches an dem Einfüllrohr (1) befestigt ist und einem männlichen zweiten Verbindungsende (4) welches in dem Anschlussteil (5) des Kraftstoffbehälters aufgenommen ist, wobei in das Blechumformteil in einem ersten Abschnitt des zweiten Verbindungsendes (4) eine erste Nut (6) geformt ist, wobei ein ringförmiges Verriegelungselement (7) zumindest abschnittsweise durch Öffnungen des Anschlussteils (5) des Kraftstoffbehälters in das Innere des Anschlussteils (5) des Kraftstoffbehälters reicht und dort das Anschlussteil (5) des Kraftstoffbehälters durch eine Abstützung, insbesondere einen Formschluss, an der ersten Nut (6) des Verbindungsstückes (2) axial gegenüber dem Verbindungsstück (2) sichert, wobei in einem dritten Abschnitt des zweiten Verbindungsendes (4) ein Rampenring (11) angeordnet ist, wobei der Rampenring (11) ein umlaufendes Bauteil ist mit einer keilförmigen Rampenfläche, wobei ein konischer Abschnitt des Anschlussteils (5) des Kraftstoffbehälters außen an der keilförmigen Rampenfläche des Rampenrings (11) anliegt , wobei das Verriegelungselement (7) an dem Rampenring (11) als Zwischenbauteil abgestützt ist, wobei der Rampenring (11) in oder an der ersten Nut (6) axial gesichert ist.

2. Kraftstofftank nach Anspruch 1,
**dadurch gekennzeichnet, dass** das erste Verbindungsende (3) ebenfalls männlich ausgeführt ist, so dass das erste Verbindungsende (3) im Einfüllrohr (1) aufgenommen ist.

3. Kraftstofftank nach zumindest einem der vorhergehenden Ansprüche,
**dadurch gekennzeichnet, dass** das Einfüllrohr (1) einen Schlauch umfasst, insbesondere einen Kunststoffschlauch, wobei der Schlauch auf das erste Verbindungsende (3) des Verbindungsstücks (2) aufgeschoben ist.

4. Kraftstofftank nach Anspruch 3,
**dadurch gekennzeichnet, dass** außen am Schlauch eine Schlauchklemme (8) angeordnet ist, so dass der Schlauch zwischen Schlauchklemme (8) und Verbindungsstück (2) eingeklemmt ist.

5. Kraftstofftank nach zumindest einem der vorhergehenden Ansprüche,
**dadurch gekennzeichnet, dass** in einem zweiten Abschnitt des zweiten Verbindungsendes (4) eine umlaufende Dichtung (9) zwischen dem Verbindungsstück (2) und dem Anschlussteil (5) des Kraftstoffbehälters angeordnet ist, wobei die umlaufende Dichtung (9) bevorzugt in einer zweiten Nut (10) des Verbindungsstücks (2) liegt.

6. Kraftstofftank nach zumindest einem der vorhergehenden Ansprüche,
**dadurch gekennzeichnet, dass** die erste Nut (6) durch zwei begrenzende, nach außen abstehende Wellen geformt ist.

7. Kraftstofftank nach Anspruch 6,
**dadurch gekennzeichnet, dass** der Rampenring (11) an einer der zwei begrenzenden Wellen axial gesichert ist.

8. Kraftstofftank nach zumindest einem der vorhergehenden Ansprüche,
**dadurch gekennzeichnet, dass** das Anschlussteil (5) aus Metall besteht.

## Claims

1. Fuel tank comprising a fuel container with a connection part (5) of the fuel container, a filler tube (1) and a connector (2) for connecting the filler tube (1) to the connection part (5) of the fuel container, the connector (2) being a substantially cylindrical sheet metal moulded part with a first connecting end (3) which is fastened to the filler tube (1) and with a male second connecting end (4) which is received in the connection part (5) of the fuel container, a first groove (6) being formed into the sheet metal moulded part in a first section of the second connecting end (4), an annular locking element (7) reaching at least in sections through openings of the connection part (5) of the fuel container into the interior of the connection part (5) of the fuel container and securing the connection part (5) of the fuel container there axially with respect to the connector (2) by way of a support, in particular a positively locking connection, on the first groove (6) of the connector (2), a ramp ring (11) being arranged in a third section of the second connecting end (4), the ramp ring (11) being a peripheral component with a wedge-shaped ramp face, a conical section of the connection part (5) of the fuel container bearing on the outside against the wedge-shaped ramp face of the ramp ring (11), the locking element (7) being supported on the ramp ring (11) as an intermediate component, the ramp ring (11) being secured axially in or on the first groove (6).

2. Fuel tank according to Claim 1, **characterized in that** the first connecting end (3) is likewise of male configuration, with the result that the first connecting end (3) is received in the filler tube (1).

3. Fuel tank according to at least one of the preceding claims, **characterized in that** the filler tube (1) comprises a hose, in particular a plastic hose, the hose being pushed onto the first connecting end (3) of the connector (2).

4. Fuel tank according to Claim 3, **characterized in that** a hose clamp (8) is arranged on the outside on the hose, with the result that the hose is clamped in between the hose clamp (8) and the connector (2).

5. Fuel tank according to at least one of the preceding claims, **characterized in that** a peripheral seal (9) is arranged between the connector (2) and the connection part (5) of the fuel container in a second section of the second connecting end (4), the peripheral seal (9) preferably lying in a second groove (10) of the connector (2).

6. Fuel tank according to at least one of the preceding claims, **characterized in that** the first groove (6) is formed by way of two limiting corrugations which project outwards.

7. Fuel tank according to Claim 6, **characterized in that** the ramp ring (11) is secured axially on one of the two limiting corrugations.

8. Fuel tank according to at least one of the preceding claims, **characterized in that** the connection part (5) consists of metal.

## Revendications

1. Réservoir de carburant comprenant un récipient de carburant muni d'une partie de connexion (5) du récipient de carburant, un tube de remplissage (1) et un raccord (2) pour relier le tube de remplissage (1) à la partie de connexion (5) du récipient de carburant, le raccord (2) étant une pièce façonnée en tôle de forme essentiellement cylindrique munie d'une première extrémité de raccordement (3) qui est fixée au tube de remplissage (1) et d'une deuxième extrémité de raccordement mâle (4) qui est reçue dans la partie de connexion (5) du récipient de carburant, une première rainure (6) étant formée dans la pièce façonnée en tôle dans une première section de la deuxième extrémité de raccordement (4), un élément de verrouillage (7) de forme annulaire s'étendant au moins par sections à travers des ouvertures de la partie de connexion (5) du récipient de carburant à l'intérieur de la partie de connexion (5) du récipient de carburant et y sécurisant la partie de connexion (5) du récipient de carburant par un appui, notamment par une complémentarité de forme, sur la première rainure (6) du raccord (2), axialement par rapport au raccord (2), une bague à rampe (11) étant agencée dans une troisième section de la deuxième extrémité de raccordement (4), la bague à rampe (11) étant un composant périphérique muni d'une surface de rampe en forme de coin, une section conique de la partie de connexion (5) du récipient de carburant s'appliquant à l'extérieur sur la surface de rampe en forme de coin de la bague de rampe (11), l'élément de verrouillage (7) s'appuie sur la bague à rampe (11) en tant que composant intermédiaire, la bague à rampe (11) étant sécurisée axialement dans ou sur la première rainure (6).

2. Réservoir de carburant selon la revendication 1, **caractérisé en ce que** la première extrémité de raccordement (3) est également conçue sous forme mâle, de telle sorte que la première extrémité de raccordement (3) est reçue dans le tube de remplissage (1).

3. Réservoir de carburant selon au moins l'une quelconque des revendications précédentes, **caractérisé en ce que** le tube de remplissage (1) comprend un tuyau, notamment un tuyau en matière plastique, le tuyau étant enfilé sur la première extrémité de raccordement (3) du raccord (2).

4. Réservoir de carburant selon la revendication 3, **caractérisé en ce qu'**un dispositif de serrage de tuyau (8) est agencé à l'extérieur sur le tuyau, de telle sorte que le tuyau est serré entre le dispositif de serrage de tuyau (8) et le raccord (2).

5. Réservoir de carburant selon au moins l'une quelconque des revendications précédentes, **caractérisé en ce que**, dans une deuxième section de la deuxième extrémité de raccordement (4), un joint d'étanchéité périphérique (9) est agencé entre le raccord (2) et la partie de connexion (5) du récipient de carburant, le joint d'étanchéité périphérique (9) étant de préférence situé dans une deuxième rainure (10) du raccord (2).

6. Réservoir de carburant selon au moins l'une quelconque des revendications précédentes, **caractérisé en ce que** la première rainure (6) est formée par deux ondulations de délimitation faisant saillie vers l'extérieur.

7. Réservoir de carburant selon la revendication 6, **caractérisé en ce que** la bague à rampe (11) est sécurisée axialement sur l'une des deux ondulations de délimitation.

8. Réservoir de carburant selon au moins l'une quelconque des revendications précédentes, **caractérisé en ce que** la partie de connexion (5) est constituée de métal.
